**Europäisches Patentamt**

**European Patent Office**

**Office européen des brevets**

(19)

(11) Numéro de publication: **0 188 296**
**B1**

## (12) FASCICULE DE BREVET EUROPEEN

(45) Date de publication du fascicule du brevet:
**08.11.89**

(21) Numéro de dépôt: **86200010.6**

(22) Date de dépôt: **07.01.86**

(51) Int. Cl.⁴: **G 02 C 5/16**

(54) **Branche flexible pour montures de lunettes.**

(30) Priorité: **14.01.85 IT 6702785**

(43) Date de publication de la demande:
**23.07.86 Bulletin 86/30**

(45) Mention de la délivrance du brevet:
**08.11.89 Bulletin 89/45**

(84) Etats contractants désignés:
**AT CH DE FR LI**

(56) Documents cités:
**FR-A- 1 246 524**
**FR-A- 1 399 533**
**FR-A- 2 198 165**
**US-A- 3 627 406**

(73) Titulaire: **Giovannini, Gian Piero, Frazione S. Elena 2,**
**I-11010 Sarre (Aôste) (IT)**

(72) Inventeur: **Giovannini, Gian Piero, Frazione S. Elena 2,**
**I-11010 Sarre (Aôste) (IT)**

(74) Mandataire: **Patrito, Pier Franco, Dr. Ing., Cabinet**
**PATRITO BREVETTI Via Don Minzoni 14, I-10121 Torino**
**(IT)**

ACTORUM AG

# Description

La présente invention concerne une branche flexible pour monture de lunettes, ainsi que les montures de lunettes et les lunettes comportant de telles branches flexibles.

Actuellement les branches pour montures de lunettes sont constituées par un corps en matière plastique dans lequel est incorporée une armature en acier; par conséquent, toutes les branches présentent, en effet, une certaine flexibilité élastique, spécialement dans leur partie proximale (c'est à dire la partie la plus proche de l'articulation au cadre de la monture) où l'armature en acier a une forme plate et est relativement mince. Cependant, habituellement on appelle «branches flexibles» des branches dans lesquelles on a adopté des configurations particulières destinées à en augmenter considérablement la flexibilité élastique. C'est à ce genre de branches qu'on se réfère dans la présente description.

Les branches flexibles pour montures de lunettes sont connues en des formes différentes appartenant substantiellement à deux groupes. Un premier groupe comprend des branches dans lesquelles le corps en matière plastique dans lequel est incorporée l'armature en acier est simplement coupé ou bien il est très aminci dans certains endroits de sa partie proximale, de sorte à ne pas s'opposer à la flexion élastique de l'armature dans la partie dans laquelle cette dernière est aplatie. Un deuxième groupe comprend des branches dans lesquelles, en plus de la mesure technique indiquée ci dessus pour le premier groupe, des éléments rigides d'articulation, en métal ou en matière plastique, sont interposés entre les tronçons du corps en matière plastique dans lesquels est incorporée l'armature, et sont accouplés cinématiquement à ces tronçons, afin de régler les déformations que la branche peut subir quand elle est soumise à des sollicitations de flexion.

En particulier, le brevet FR-A-1 246 524 montre une branche flexible pour monture de lunette comprenant un corps en matière plastique dans lequel est incorporée une armature en acier, ledit corps en matière plastique étant dans la partie proximale de la branche subdivisé dans sa longueur en une pluralité de tronçons successifs substantiellement distincts et espacés, entre lesquels sont interposés des éléments qui entourent ladite armature en acier.

Cependant ces branches flexibles sont peu confortables pour le porteur, sourtout du fait que leur fléchissement élastique est de nature métallique, étant dû essentiellement à l'armature en acier; dans les branches du deuxième groupe mentionné il y a un certain amortissement de ce fléchissement élastique, dû au frottement qui se manifeste dans les accouplements cinématiques entre les tronçons du corps en matière plastique et les éléments d'articulations interposés, mais l'introduction d'un frottement de glissement dans la flexion des branches n'est certainement pas telle qu'elle puisse rendre plus confortables ces branches. De plus, les branches du premier groupe sont peu appréciées au point de vue esthétique à cause des interruptions visibles dans la ligne de la partie proximale des branches, tandis que les branches du deuxième groupe sont de construction excessivement coûteuse.

Le but de la présente invention est de réaliser, bien qu'avec une construction substantiellement économique, une branche flexible pour montures de lunettes, ayant un comportement élastique tel qu'elle assure le plus grand confort pour le porteur.

Ce but est atteint, selon l'invention, par une branche flexible pour montures de lunettes, comprenant un corps en matière plastique dans lequel est incorporée une armature en acier, ledit corps en matière plastique étant, dans la partie proximale de la branche, subdivisé dans sa longueur en une pluralité de tronçons successifs substantiellement distincts et espacés entre lesquels sont interposés des éléments qui entourent ladite armature en acier, ladite branche flexible étant caractérisée en ce que lesdits éléments interposés sont faits en une matière ayant une élasticité de type caoutchouteux.

Grâce à cette caractéristique, toute flexion imprimée à la branche, et par conséquent en particulier à la partie proximale de son armature métallique en correspondance des parties de séparation entre les tronçons successifs du corps en matière plastique, provoque une compression localisée des éléments de type caoutchouteux interposés, lesquels, grâce au frottement interne et, d'une manière plus générale, au comportement élastique caractéristique des matières caoutchouteuses, influencent considérablement le comportement élastique de toute la branche, en le rendant très confortable pour le porteur. D'ailleurs, la réalisation de la structure particulière de la branche selon l'invention ne comporte ni des travaux ni des équipements coûteux, de sorte que la branche résultante est de construction économique.

Les caractéristiques de l'objet de l'invention ressortiront plus clairement de la description suivante de deux formes de réalisation données à titre d'exemples non limitatifs, représentées schématiquement dans le dessins annexé, dans lequel:

la figure 1 est une vue laterale des lunettes comportant des branches selon la présente invention;

la figure 2 montre à une échelle plus grande une section de la partie proximale de la branche, faite selon le plan médian de l'armature aplatie;

les figures 3 et 4 montrent deux sections faites selon les lignes III-III et IV-IV de la figure 2; et

la figure 5 représente, d'une manière similaire de la figure 2, une autre forme de réalisation de l'invention.

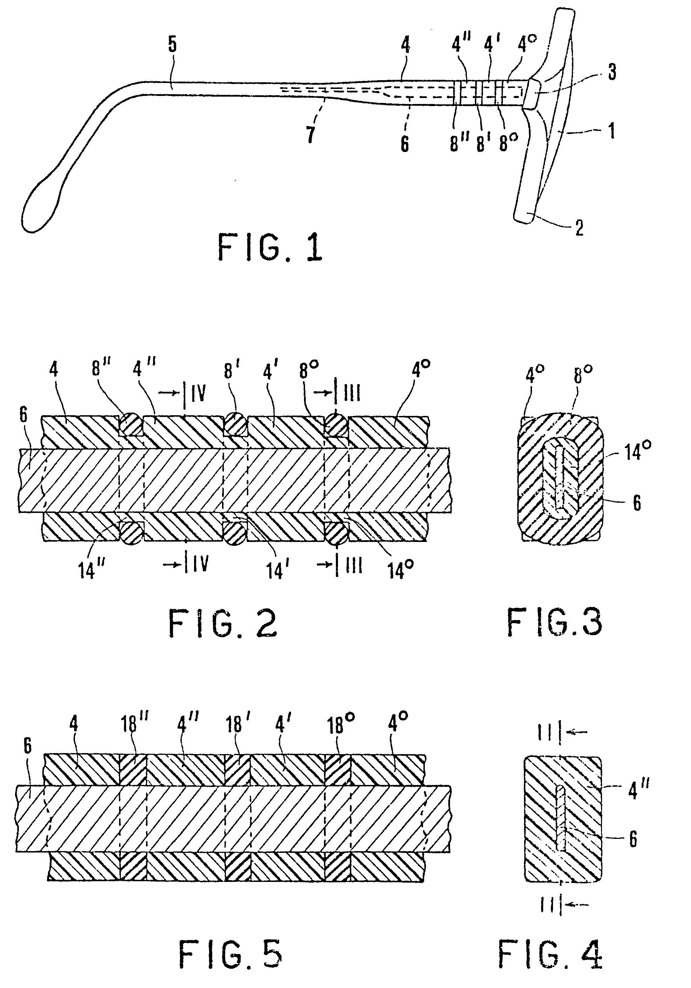

Faisant référence tout d'abord à la figure 1, les lunettes comportent un cadre 2 supportant les lentilles 1 et, à chaque extrémité latérale 3 du cadre, une charnière (non visible parce qu'elle est située du côté intérieur) à laquelle est reliée une branche 4–5. Cette dernière comprend une partie distale 5 (c'est à dire la partie qui est plus loin de la charnière) courbe et une partie proximale 4 (c'est à dire la partie qui est plus proche de la charnière) rectiligne, elle est constituée par un corps en matière plastique et incorpore une armature 6–7 qui, dans la partie distale 5, est formée par un rond d'acier 7, tandis que dans la partie proximale 4 elle est aplatie en forme de lame 6. Les parties, telles qu'elles ont été décrites jusqu'ici, appartiennent à la technique bien connue et habituelle.

Selon l'invention, la partie proximale 4 du corps en matière plastique 4–5 de la branche, comme on peut mieux l'observer dans la section de la figure 2, est subdivisée dans sa longueur en un certain nombre de tronçons successifs 4°, 4', 4'', 4, et des éléments 8°, 8', 8'' en une matière ayant un caractère caoutchouteux sont insérés entre les tronçons 4°, 4', 4'', 4 du corps en matière plastique.

Par conséquent, comme on peut bien le comprendre, quand une flexion est imposée à la branche, cette flexion se localise principalement dans les parties de séparation entre les tronçons 4°, 4', 4'', 4, où le corps en matière plastique n'empêche pas la déformation, et les éléments en matière caoutchouteuse qui se trouvent dans ces parties de séparation sont comprimés par le côté de la branche qui tend a devenir concave à cause de la flexion. De ce fait, le fléchissement élastique qui en résulte ne dépend plus seulement des caractéristiques de l'armature métallique interne 6–7, mais aussi, et d'une façon essentielle, des caractéristiques de la matière caoutchouteuse des éléments interposés 8°, 8', 8''. Cela modifie radicalement le comportement élastique de la branche, en le rendant beaucoup plus confortable pour le porteur.

La subdivision en tronçons de la partie proximale 4 du corps en matière plastique de la branche peut être obtenue, selon les meilleures opportunités de production, en moulant ledit corps dejà dans cette configuration, ou bien en réalisant la branche dans sa forme habituelle et en usinant successivement sa partie proximale afin d'en emporter les parties destinées à séparer les différents tronçons 4°, 4', 4'', 4 et à recevoir les éléments 8°, 8', 8'' en matière caoutchouteuse. Dans les deux cas, la séparation entre les tronçons successifs 4°, 4', 4'', 4 peut être complète, c'est à dire que l'armature interne 6 peut être mise à nu dans les régions de séparation entre lesdits tronçons (comme il sera représenté dans la figure 5 pour une autre forme de réalisation), ou bien, comme on l'a illustré dans la figure 2, dans ces régions de séparation l'épaisseur du corps 4 en matière plastique peut être réduite à une valeur telle à ne pas comporter une rigidité appréciable, toutefois sans laisser découverte l'armature, laquelle demeure revêtue par des minces couches 14°, 14', 14'' en matière plastique.

Les éléments 8°, 8', 8'' peuvent être en caoutchouc naturel ou synthétique, ou bien en une matière plastique ayant des caractéristiques caoutchouteuses, comme par exemple un copolymère de butadiène, le tétrafluoréthylène ou similaires. Lesdits éléments peuvent être formés par exemple par des bagues d'étanchéité, les ainsi-dits O-ring 5, comme dans la première forme de réalisation selon les figures 1 à 3. Ces bagues d'étanchéité peuvent être dilatées afin de les enfiler sur la branche a partir de l'extrémité de la partie distale 5 et puis les faire glisser jusqu'aux points de séparation entre les tronçons 4, 4'', 4', 4°, dans lesquels elles pénètrent en reprenant leurs dimensions originales. Suivant le dégré de modification qu'on veut porter à l'élasticité de la branche, les éléments caoutchouteux 8°, 8', 8'' peuvent être insérés entre les tronçons en matière plastique 4°, 4', 4'', 4 avec un léger jeu, ou justes, ou bien encore plus ou moins comprimés dans une condition de coaction.

Dans une autre forme de réalisation, représentée dans la figure 5, les éléments en matière caoutchouteuse 18°, 18', 18'' peuvent être configurés de manière à continuer extérieurement la ligne de la branche dans les régions d'interruption entre les tronçons en matière plastique 4°, 4', 4'', 4. Aussi dans ce cas les éléments caoutchouteux peuvent être produits séparément et être insérés sur la branche en les déformant élastiquement, mais il est possible aussi de les former directement dans les régions d'interruption entre les tronçons successifs en matière plastique. Dans ce cas aussi, la séparation entre les tronçons successifs 4°, 4', 4'', 4 peut être complète, comme représenté dans la figure 5, ou bien on peut prévoir un revêtement mince de matière plastique sur l'armature 7, comme dans le cas de la figure 2.

Bien entendu, l'invention peut trouver son application indépendemment de la forme spécifique donnée à la branche pour des raisons pratiques ou esthétiques, et elle peut être appliquée soit à des lunettes de vue, soit à des lunettes filtrantes ou de protection.

## Revendications

1. Branche flexible pour montures de lunettes, comprenant un corps en matière plastique (4–5) dans lequel est incorporée une armature (6–7) en acier, ledit corps en matière plastique (4–5) étant, dans la partie proximale (4) de la branche, subdivisé dans sa longueur en une pluralité de tronçons successifs (4°, 4', 4'', 4) substantiellement distincts et espacés, entre lesquels sont interposés des éléments (8°, 8', 8''; 18°, 18', 18'') qui entourent ladite armature (6) en acier, ladite branche flexible étant caractérisée en ce que lesdits éléments interposés (8° 8', 8''; 18°, 18', 18'') sont faits en une matière ayant une élasticité de type caoutchouteux.

2. Branche selon la revendication 1, caractérisée en ceque la subdivision en tronçons (4°, 4', 4'', 4) du corps en matière plastique de la partie proximale (4) de la branche comporte une séparation complète entre lesdits tronçons, l'armature interne (6) n'étant pas recouverte par la matière plastique dans les régions de séparation (figure 5).

3. Branche selon la revendication 1, caractérisée en ce que la subdivision en tronçons (4°, 4', 4'', 4) du corps en matière plastique de la partie proximale (4) de la branche ne comporte pas une séparation complète entre lesdits tronçons, l'armature interne (6) restant recouverte par une mince couche (14°, 14', 14'') de matière plastique aussi dans les régions de séparation (figure 2).

4. Branche selon la revendication 1, caractérisée en ce que lesdits éléments (8°, 8', 8''; 18°, 18', 18'') en matière présentant une élasticité de type caoutchouteux sont produits séparément de la branche (4–5) et ils sont successivement insérés dans les régions de séparation entre lesdits tronçons (4°, 4', 4'', 4) du corps en matière plastique.

5. Branche selon la revendication 1, caractérisée en ce que lesdits éléments (18°, 18', 18'') en matière présentant une élasticité de type caoutchouteux sont formés directement dans les régions de séparation entre lesdits tronçons (4°, 4', 4'') du corps en matière plastique.

6. Branche selon la revendication 1, caractérisée en ce que les dits éléments (18°, 18', 18'') en matière ayant une élasticité de type caoutchouteux présentent un pourtour tel qu'ils continuent la ligne de la branche (4–5) même dans les régions de séparation entre lesdits tronçons (4°, 4', 4'', 4) du corps en matière plastique.

7. Branche selon la revendication 1, caractérisée en ce que lesdits éléments (8°, 8', 8'') en matière ayant une élasticité de type caoutchouteux présentent un pourtour tel qu'ils ne continuent pas la ligne de la branche (4–5) dans les régions de séparation entre lesdits tronçons (4°, 4', 4'', 4) du corps en matière plastique.

8. Branche selon la revendication 1, caractérisée en ce que lesdits éléments (8°, 8', 8''; 18°, 18', 18'') en matière ayant une élasticité de type caoutchouteux sont insérés avec un léger jeu dans les régions de séparation entre lesdits tronçons 64°, 4', 4'', 47 du corps en matière plastique.

9. Branche selon la revendication 1, caractérisée en ce que lesdits éléments (8°, 8', 8''; 18°, 18', 18'') en matière ayant une élasticité de type caoutchouteux sont insérés substantiellement sans jeu ni forcement dans les régions de séparation entre lesdits tronçons (4°, 4', 4'', 4) du corps en matière plastique.

10. Branche selon la revendication 1, caractérisée en ce que lesdits éléments (8°, 8', 8''; 18°, 18', 18'') en matière ayant une élasticité de type caoutchouteux sont insérés avec un certain forcement dans les régions de séparation entre lesdits tronçons (4°, 4', 4'', 4) du corps en matière plastique.

11. Monture pour lunettes, caractérisée en ce qu'elle comporte des branches selon la revendication 1.

12. Lunettes (de vue, filtrantes ou de protection), caractérisées en ce qu'elles comportent des branches selon la revendication 1.

**Patentansprüche**

1. Biegsamer Bügel für Brillenfassung mit einem Körper aus Kunststoff (4–5), in dem eine Stahlbewehrung (6–7) eingebaut ist, wobei der Kunststoffkörper (4–5) im Wurzelbereich des Bügels in Längsrichtung in mehrere aufeinanderfolgende Abschnitte (4°, 4', 4'', 4) unterteilt ist, die im wesentlichen vereinzelt und voneinander entfernt sind und zwischen denen Teile (8°, 8', 8''; 18°, 18', 18'') angeordnet sind, die die Stahlbewehrung (6) umgreifen, dadurch gekennzeichnet, dass die Zwischenteile (8°, 8', 8''; 18°, 18', 18'') aus einem gummielastischen Material bestehen.

2. Bügel nach Anspruch 1, dadurch gekennzeichnet, dass die Unterteilung in Abschnitte (4°, 4', 4'', 4) des Kunststoffkörpers im Wurzelbereich (4) des Bügels die vollständige Trennung dieser Abschnitte vorsieht, wobei die Innenbewehrung (6) in den Trennbereichen keine Kunststoffabdeckung aufweist (Figur 5).

3. Bügel nach Anspruch 1, dadurch gekennzeichnet, dass die Unterteilung in Abschnitte (4°, 4', 4'', 4) des Kunststoffkörpers im Wurzelbereich (4) des Bügels keine vollständige Trennung dieser Abschnitte vorsieht, wobei die Innenbewehrung (6) auch in den Trennbereichen mit einer dünnen Kunststoffschicht (14°, 14', 14'') abgedeckt ist (Figur 2).

4. Bügel nach Anspruch 1, dadurch gekennzeichnet, dass die Teile (8°, 8', 8''; 18°, 18', 18'') aus gummielastischem Material vom Bügel (4–5) getrennt hergestellt und erst anschliessend in die Trennbereiche zwischen den Abschnitten (4°, 4', 4'', 4) des Kunststoffkörpers eingesetzt werden.

5. Bügel nach Anspruch 1, dadurch gekennzeichnet, dass die Teile (18°, 18', 18'') aus gummielastischem Material unmittelbar in den Trennbereichen zwischen den Abschnitten (4°, 4', 4'') des Kunststoffkörpers gebildet werden.

6. Bügel nach Anspruch 1, dadurch gekennzeichnet, dass die Umrisslinie der Teile (18°, 18', 18'') aus gummielastischem Material die Linie des Bügels (4–5) auch in den Trennbereichen zwischen den Abschnitten (4°, 4', 4'', 4) des Kunststoffkörpers fortsetzt.

7. Bügel nach Anspruch 1, dadurch gekennzeichnet, dass die Umrisslinie der Teile (8°, 8', 8'') aus gummielastischem Material die Linie des Bügels (4–5) in den Trennbereichen zwischen den Abschnitten (4°, 4', 4'', 4) des Kunststoffkörpers nicht fortsetzt.

8. Bügel nach Anspruch 1, dadurch gekennzeichnet, dass die Teile (8°, 8', 8''; 18°, 18', 18'') aus gummielastischem Material mit etwas Spiel in den Trennbereichen zwischen den Abschnitten (4°, 4', 4'', 4) des Kunststoffkörpers eingesetzt sind.

9. Bügel nach Anspruch 1, dadurch gekennzeichnet, dass die Teile (8°, 8', 8''; 18°, 18', 18'') aus gummielastischem Material in den Trennbereichen zwischen den Abschnitten (4°, 4', 4'', 4) des Kunststoffkörpers im wesentlichen ohne Spiel und ohne Pressitz eingesetzt sind.

10. Bügel nach Anspruch 1, dadurch gekennzeichnet, dass die Teile (8°, 8', 8''; 18°, 18', 18'') aus gummielastischem Material in den Trennbereichen zwischen den Abschnitten (4°, 4', 4'', 4) des Kunststoffkörpers mit einem gewissen Presssitz eingesetzt sind.

11. Brillenfassung, dadurch gekennzeichnet, dass es Bügel nach Anspruch 1 umfasst.

12. Brille (Seh-, Sonnen- oder Schutzbrille), dadurch gekennzeichnet, dass sie mit Bügeln nach Anspruch 1 versehen sind.

## Claims

1. A flexible sidebar for spectacle frames, comprising a body of plastic material (4-5) embodying a steel reinforcement (6-7), the proximal segment (4) of said body of plastic material (4-5) being lengthwise divided into a plurality of substantially distinct and spaced successive sections (4°, 4', 4°''', 4), between which are interposed elements (8°, 8', 8''; 18, 18', 18'') surrounding said steel reinforcement (6), said sidebar being characterized in that said interposed elements (8°, 8', 8''; 18°, 18', 18'') are made of a material with a rubber type of elasticity.

2. A sidebar as claimed in Claim 1, characterized in that the division into sections (4°, 4', 4'', 4) of the proximal segment (4) of the body of plastic material (4-5) results in a complete separation of said sections, the internal reinforcement (6) being not covered by the plastic material in the separation areas (Figure 5).

3. A sidebar as claimed in Claim 1, characterized in that the division into sections (4°, 4', 4'', 4) of the proximal segment (4) of the body of plastic material (4-5) does not result in a complete separation of said sections, the internal reinforcement (6) remaining covered by a thin coating (14°, 14', 14'') of plastic material in the separation areas as well (Figure 2).

4. A sidebar as claimed in Claim 1, characterized in that said elements (8°, 8', 8''; 18°, 18', 18'') of o material having a rubber type of elasticity are produced separately from the body (4-5) and are subsequently inserted in the separation areas between the sections (4°, 4', 4'', 4) of said body of plastic material.

5. A sidebar as claimed in Claim 1, characterized in that said elements (18°, 18', 18'') of a material having a rubber type of elasticity are formed directly in the separation areas between said sections (4°, 4', 4'', 4) of the body of plastic material.

6. A sidebar as claimed in Claim 1, characterized in that said elements (18°, 18', 18'') of a material having a rubber type of elasticity have such an outline as to follow the line of the sidebar body (4-5) even in the separation areas between said sections (4°, 4', 4'', 4) of the body of plastic material.

7. A sidebar as claimed in Claim 1, characterized in that said elements (8°, 8', 8'') of a material having a rubber type of elasticity have such an outline as not to follow the line of the sidebar body (4-5) in the separation areas between said sections (4°, 4', 4'', 4) of the body of plastic material.

8. A sidebar as claimed in Claim 1, characterized in that said elements (8°, 8', 8''; 18°, 18', 18'') of a material having a rubber type of elasticity are inserted with a slight clearance in the separation areas between said sections (4°, 4', 4'', 4) of the body of plastic material.

9. A sidebar as claimed in Claim 1, characterized in that said elements (8°, 8', 8''; 18°, 18', 18'') of a material having a rubber type of elasticity are inserted substantially without clearance and without forcing in the separation areas between said sections (4°, 4', 4'', 4) of the body of plastic material.

10. A sidebar as claimed in Claim 1, characterized in that said elements (8°, 8', 8''; 18°, 18', 18'') of a material having a rubber type of elasticity are inserted with a certain degree of forcing into the separation areas between said sections (4°, 4', 4'', 4) of the body of plastic material.

11. A frame for spectacles, characterized in that it comprises sidebars as claimed in Claim 1.

12. Spectacles (as aids to vision or for filtering or protective purposes), characterized in that they comprise sidebars as claimed in Claim 1.

FIG. 1

FIG. 2

FIG.3

FIG.5

FIG. 4